# EUROPÄISCHE PATENTANMELDUNG

(11) **EP 1 022 845 A2**
(43) Veröffentlichungstag der Anmeldung: **26.07.2000**
(21) Anmeldenummer: 00101065.1
(22) Anmeldetag: 20.01.2000
(51) Int. Cl.: H02P 7/622

(54) **Verfahren und Vorrichtung zum Betreiben eines Elektromotors eines Dokumentenvernichters**

(30) Priorität: 21.01.1999 DE 19902227
(71) Anmelder: SCHLEICHER & Co. INTERNATIONAL AKTIENGESELLSCHAFT, D-88677 Markdorf/Bodensee (DE)
(72) Erfinder: Lang, Bruno, 88697 Bermatingen (DE); Erlecke, Jens, 88364 Wolfegg (DE)
(74) Vertreter: Patentanwälte Ruff, Beier, Schöndorf und Mütschele

(57) **Zusammenfassung**

Durch die Erfindung wird ein Verfahren zum Betreiben eines Elektromotors (18) eines Dokumentenvernichters zum Zerkleinern von Flachmaterial geschaffen, wobei erfindungsgemäß aus einem Gleichstrom durch Umformen ein wenigstens einphasiger Wechselstrom zur Speisung des Motors erzeugt wird. Zum Umformen wird vorteilhaft ein Wechselrichter (12) verwendet, wobei der Gleichstrom durch einen Gleichrichter (14) aus einem einphasigen Wechselstrom (15) erzeugt werden kann. Bevorzugt wird ein in Spannung und/oder Frequenz variabler Drehstrom erzeugt. So kann der Motor (18) in weiten Bereichen den Betriebsverhältnissen angepaßt geregelt werden.

## Beschreibung

### ANWENDUNGSGEBIET UND STAND DER TECHNIK

Die Erfindung betrifft ein Verfahren zum Betreiben eines Elektromotors eines Dokumentenvernichters zum Zerkleinern von Flachmaterial.

Bekannte Dokumentenvernichter weisen oftmals sogenannte Universalmotoren auf, deren spezielle Bauweise einen Betrieb auch mit Wechselspannung erlaubt. Üblicherweise werden sie bei Anwendungen wie im Bürobereich mit der üblichen gebäudeinternen Wechselspannung (230 Volt, einphasig) betrieben. Bauartbedingte Nachteile von Universalmotoren wie Verschleiß und Funkstörungsprobleme werden teilweise durch die Verwendung von Drehstrom-Asynchron-Motoren, beispielsweise Kurzschlußläufermotoren, vermieden. Hierfür sind jedoch separate Drehstromanschlüsse zu installieren, was vor allem im Bürobereich in vielen Fällen mit hohem Aufwand verbunden ist.

Andere Lösungen sehen vor, das Drehfeld mittels eines phasenverschobenen Magnetfelds zu erzeugen. Die erforderliche Phasenverschiebung wird durch Vorschalten eines Kondensators erreicht, um damit einen Einphasenmotor zu betreiben. Dabei ist jedoch die Leistungscharakteristik solcher Antriebe wegen der großen Stromwärmeverluste im Läufer und des großen Leerlaufstromes nicht besonders gut. Die Leistung entspricht in etwa 65 % der Leistung eines vergleichbaren Drehstrommotors.

### AUFGABE UND LÖSUNG

Es ist Aufgabe der Erfindung, ein Verfahren gemäß dem Oberbegriff des Anspruchs 1 zu schaffen, mit dem die genannten Nachteile des Standes der Technik vermieden werden sollen, mit dem ein Elektromotor eines Dokumentenvernichters mit höherer Leistung betrieben werden kann, wobei dieser insbesondere an eine Vielzahl von Versorgungsanschlüssen anschließbar sein soll.

Diese Aufgabe wird dadurch gelöst, daß aus einem Gleichstrom durch Umformen ein wenigstens einphasiger Wechselstrom erzeugt wird, mit dem der Elektromotor gespeist wird. Ausgehend von dem Gleichstrom ermöglicht dies einen weiten Gestaltungsspielraum zur Erzeugung des wenigstens einphasigen Wechselstroms. Bevorzugt wird dreiphasiger Wechselstrom erzeugt, also Drehstrom. Der Gleichstrom kann in einen Wechselstrom variabler Frequenz umgewandelt werden. Dies ermöglicht eine Anpassung an einen jeweils geforderten Betriebszustand des Elektromotors. Vorzugsweise wird bei geringer Belastung des Elektromotors im Betrieb eine hohe Frequenz eingestellt, wodurch sich vor allem bei der Verwendung von Kurzschlußläufermotoren eine höhere Drehzahl und somit eine schnellere Vernichtung von Dokumenten ergibt. Es können mehrere Festdrehzahlen vorgesehen sein, mit denen unterschiedliche Drehzahlen (langsam, mittel, schnell) für unterschiedliche Betriebsweisen eingestellt werden können. Weitere Vorteile, insbesondere beim Anlauf des Elektromotors, können durch eine kontinuierliche Veränderung der Frequenz und somit der Drehzahl erzielt werden. Der Verschleiß des gesamten Gerätes kann reduziert werden durch den Wegfall von plötzlich auftretenden Spitzenbelastungen bzw. ruckartigen Drehzahländerungen. Weiters wird der Betriebskomfort erhöht.

Darüber hinaus kann die Amplitude der Wechselspannung variabel sein zur Anpassung an das von einem Benutzer geforderte Betriebsverhalten des Elektromotors. Bevorzugt ist der erzeugte Wechselstrom sinusförmig, wobei durch die Leistungselektronik des Umformers auch andere, insbesondere beliebige Formen bzw. Wellenformen, erzeugt werden können.

Einerseits ist es möglich, den Gleichstrom aus einem fest installierten Gleichstromnetz, evtl. aus einer Notstromversorgung heraus, zu beziehen. Bevorzugt wird der Gleichstrom aus einer beliebigen Wechselstrom-Versorgung erzeugt, insbesondere einer einphasigen Wechselstrom-Versorgung. Auf diese Weise kann beispielsweise über den Gleichstrom-Zwischenkreis aus einem normalen 230 Volt-Anschluß ein gewünschter, beispielsweise dreiphasiger, Wechselstrom erzeugt werden. Mit einem derartigen Verfahren kann ein Dokumentenvernichter mit einem Drehstrommotor an einer normalen Steckdose betrieben werden. Weitere Vorteile, die sich bei einer Umformung eines Wechselstroms über einen Gleichstrom-Zwischenkreis in einen Versorgungs-Wechselstrom für den Elektromotor ergeben, sind die in weiten Grenzen beliebige Einstellbarkeit von Frequenz, Amplitude sowie Form des erzeugten Wechselstroms. Detaillierte Erläuterungen hierzu finden sich nachfolgend in der Figurenbeschreibung.

Ein mögliches Verfahren nach der Erfindung kann vorsehen, daß der Wechselstrom für den Elektromotor durch einen Wechselrichter als erster Umrichter aus dem Gleichstrom erzeugt wird, wobei der Wechselrichter vorzugsweise über einen Zwischenkreis mit einem Gleichrichter als zweiter Umrichter zur Erzeugung des Gleichstroms aus der Netzspannung verbunden ist. Die Umrichter sind vorzugsweise Leistungselektronik-Bau-gruppen, beispielsweise mit TRIACS, Leistungstransistoren oder Thyristoren als Ventile bestückt. Einerseits können die Umrichter über eine Art Puffer miteinander verbunden sein, andererseits kann es möglich sein, sie direkt miteinander zu koppeln, evtl. über einen Gleichstromzwischenkreis. Der Wechselrichter ist abhängig von dem zu erzeugenden Wechselstrom ausgebildet, in der Regel mit sechs Ventilen zur Erzeugung von Drehstrom.

Eine erfindungsgemäße Vorrichtung zum Betreiben eines Elektromotors eines Dokumentenvernichters zum Zerkleinern von Flachmaterial, die sich vorteilhaft zur Durchführung des oben beschriebenen Verfahrens eignet, weist wenigstens einen Umrichter auf, der aus einem Gleichstrom einen Wechselstrom mit wenigstens einer Phase für den Elektromotor erzeugt. Der Umrichter arbeitet als Wechselrichter und erzeugt bevorzugt Drehstrom. Vorteilhaft können ein Drehstrommotor bzw. ein Asynchron-Motor verwendet werden. Insbesondere ist ein Asynchron-Motor mit einem Kurzschlußläufer zum Betrieb an einem dreiphasigen Wechselstrom von Vorteil. Durch einen Umrichter mit Leistungselektronik kann ein Wechselstrom mit im wesentlichen beliebiger Form erzeugt werden. Neben dem bereits genannten Wechselrichter als erster Umrichter kann ein Gleichrichter als zweiter Umrichter vorgesehen sein, durch den es möglich ist, den Gleichstrom aus einer Wechselstrom-Versorgung zu erzeugen. Diese kann beispielsweise einphasig sein, beispielsweise als übliche im Haus- bzw. Bürobereich installierte Steckdose. Der zweite Umrichter kann über einen verschiedenartig ausgeführten Zwischenkreis mit dem ersten Umrichter verbunden sein.

Weiters ist es möglich, an dem Elektromotor einen Drehzahlgeber anzuordnen, insbesondere an einem seiner Wellenenden zur Regelung wenigstens eines der Umrichter in Abhängigkeit vom Lastfall und/oder der Lage der Welle des Motors. Eine Belastungssensierung kann durch einen Drehzahlgeber, eine Stromerfassung oder eine andere geeignete Sensorik erfolgen. Vorteilhaft wird der erste Umrichter damit ausgesteuert.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

### KURZBESCHREIBUNG DER ZEICHNUNGEN

Ein Ausführungsbeispiel der Erfindung ist in den Zeichnungen dargestellt und wird im folgenden näher erläutert. In den Zeichnungen zeigen:
- Fig. 1: eine schematische Darstellung eines Gleichund eines Wechselrichters, die einen Elektromotor speisen,
- Fig. 2: eine Kennlinie eines Drehstrommotors im Vergleich zu der eines Kondensatormotors und
- Fig. 3: ein Betriebskennlinienfeld für einen erfindungsgemäß versorgten Drehstrommotor.

### DETAILLIERTE BESCHREIBUNG DES AUSFÜHRUNGSBEISPIELS

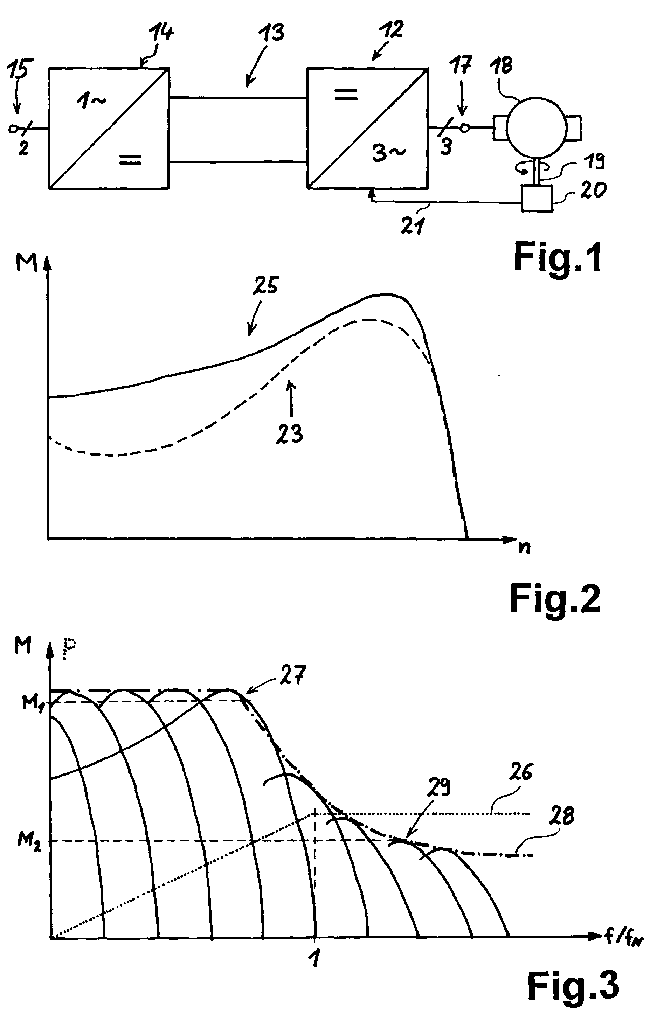

Die Fig. 1 zeigt eine mögliche Anordnung mit einem Wechselrichter 12 als erster Umrichter, der von einem Gleichstrom gespeist wird und dreiphasigen Wechselstrom bzw. Drehstrom beliebiger Frequenz, Form und Amplitude erzeugt. Über den Gleichstrom-Zwischenkreis 13 wird der Wechselrichter 12 von dem Gleichrichter 14 gespeist, welcher aus einphasigem Wechselstrom einen Gleichstrom macht. Dazu ist er an einen Wechselstromanschluß 15 angeschlossen, beispielsweise an eine Netzsteckdose.

Der Wechselrichter 12 ist über eine dreiphasige Verbindungsleitung 17 mit einem Drehstrommotor 18 verbunden. Der Drehstrommotor 18 weist, insbesondere an einem Wellenende 19, einen Drehzahlgeber 20 auf, der Drehzahl und/oder Lage des Läufers des Motors 18 erfaßt. Die Daten werden über eine Rückführung 21 an den Wechselrichter 12 zurückgegeben. Sie können zur Regelung der Versorgung des Drehstrommotors 18 verwendet werden. Der Motor 18 treibt beispielsweise ein Schneidwerk eines Dokumentenvernichters an, das bevorzugt von dem Motor über ein Getriebe angetriebene, ineinander eingreifende Schneidwalzen aufweist.

Evtl. kann in dem Gleichstrom-Zwischenkreis 13 ein sogenannter Hochsetzsteller enthalten sein, der die Spannung erhöht. Dies ermöglicht eine Versorgung des Wechselrichters 12 mit einer unter Umständen wesentlich höheren als der am Wechselstromanschluß 15 liegenden Spannung.

Die Fig. 2 zeigt gestrichelt eine Kennlinie 23 eines Kondensatormotors im Vergleich zu einer Kennlinie 25 eines Drehstrommotors. Aufgetragen ist das Drehmoment M über der Drehzahl n, welche mit der Betriebsfrequenz korreliert ist. Wie zu erkennen ist, ist bei der Kennlinie 25 des Drehstrommotors das Anlaufmoment höher als bei der Kennlinie 23 des Kondensatormotors, ebenso das Kippmoment, das ist der Bereich des maximalen Moments M. Darüber hinaus fehlt der ausgeprägte Sattelbereich der Kennlinie 23, der im Bereich niedriger Drehzahlen auf das Anlaufmoment folgt.

Die Fig. 3 zeigt ein Diagramm, in dem ein Betriebskennlinienfeld dargestellt ist. Dazu wird das Drehmoment M über dem Verhältnis der Betriebsfrequenz f zur Nennfrequenz f_{N} aufgetragen. Es ergeben sich seitlich verschobene Kennlinien, ähnlich der Kennlinie 25 aus Fig. 2. Deren Maxima, also die Kippmomente, bilden eine strichpunktiert dargestellte Einhüllende, welche zuerst waagerecht verläuft und dann in etwa parabelförmig abfällt.

Ebenso ist die Leistung P des Motors über f/f_{N} aufgetragen, allerdings punktiert. Ein zu beachtender Punkt ist der bei f/f_{N} gleich 1. Bei einer Nennfrequenz f_{N} von 50 Hz beträgt die Eckfrequenz f_{eck} ebenfalls 50 Hz, das Verhältnis der beiden zueinander ist also 1. Die Leistungskurve beginnt als Ursprungsgerade bei Null und verläuft ab f/f_{N} gleich 1 als Konstante. Dies bedeutet, daß bis zu der Eckfrequenz f_{eck} bei f/f_{N} die Leistung des Motors zunimmt und ab der Eckfrequenz in etwa gleich bleibt. Spannung und Ausgangsleistung sind beim Kurzschlußläufermotor proportional zueinander. Bei einer Ausführungsmöglichkeit der Erfindung kann die Nennfrequenz größer als 50 Hz gewählt werden, beispielsweise zu 120 Hz.

Eingetragen sind zwei Betriebspunkte des Drehstrommotors auf verschiedenen Kennlinien. Der erste Betriebspunkt 27 mit M1 weist bei f/f_{N} kleiner 1 sein beinahe maximales Drehmoment auf. Dieser erste Betriebspunkt 27 wird durch Einstellung der Frequenz f kleiner als f_{N} über den Wechselrichter 12 zur Bewältigung großer Mengen Papier bei einem Dokumentenvernichter genommen. Zwar sinkt die Schnittgeschwindigkeit, dafür liegt aber beinahe das maximale Drehmoment an. Durch Spannungserhöhung unter f_{N} ist eine Momentenerhöhung möglich.

Der zweite Betriebspunkt 29 wurde bei einer Frequenz deutlich größer als f_{N} gewählt. Zwar ist das dabei erzielte Drehmoment M₂ erheblich geringer als das des ersten Betriebspunktes 27, dafür ist jedoch die Frequenz f in etwa doppelt so groß und demzufolge auch die Schnittgeschwindigkeit. Dieser zweite Betriebspunkt 29 wird bevorzugt zur Bewältigung kleinerer Mengen von zu zerschneidendem Papier gewählt.

Im Bereich bis zu f gleich f_{N} wird der Motor mit konstantem magnetischem Fluß angetrieben. Das Kippmoment bleibt dabei konstant. Erreicht die Spannung ihren Maximalwert, wird nur noch die Frequenz weiter erhöht. Der magnetische Fluß und damit auch das zur Verfügung stehende Moment nehmen durch Feldschwächung ab. Dadurch nimmt das Kippmoment bei im wesentlichen konstanter Leistung quadratisch ab. Des weiteren können durch entsprechende Wahl der Spannungsregelcharakteristik (Variation der Eckfrequenz) das abgegebene Motordrehmoment erhöht und damit die Schneidleistung optimiert werden.

Registriert der Motor bei anfänglichem Betrieb im Feldschwächebereich eine geringe Belastung bzw. Papiermenge, so wird er weiterhin in diesem Bereich betrieben. Dazu ist eine Überwachung des Stromes vorteilhaft. Wird dagegen mehr Papier zugeführt, regelt der Wechselrichter 12 die Frequenz zurück bis zu Eckfrequenz. Wird darüber hinaus noch mehr Papier zugeführt, regelt der Wechselrichter die Frequenz sowie wahlweise die Spannung zurück um das maximale Drehmoment des Motors anzusteuern. Erreichen Frequenz und/oder Spannung einen unteren Schwellwert bzw. der Motorstrom einen oberen Schwellwert, so wird der Motor 18 abgeschaltet.

Eine erfindungsgemäße Vorrichtung kann in einem Dokumentenvernichter den Wechselrichter 12 und den Gleichrichter 14 sowie einen Gleichstrom-Zwischenkreis 13 enthalten. Auf diese Weise kann ein kompaktes sowie umkompliziert anzuschließendes Gerät aufgebaut werden. Dieses ist dann lediglich an eine normale Netzsteckdose durch Einstecken anzuschließen.

## Patentansprüche

1. Verfahren zum Betreiben eines Elektromotors (18) eines Dokumentenvernichters zum Zerkleinern von Flachmaterial, dadurch gekennzeichnet, daß aus einem Gleichstrom (13) durch Umformen ein wenigstens einphasiger Wechselstrom (17) erzeugt wird, mit dem der Elektromotor (18) gespeist wird.

2. Verfahren nach Anspruch 1, dadurch gekennzeichnet, daß der Wechselstrom ein dreiphasiger Drehstrom (17) ist.

3. Verfahren nach Anspruch 1 oder 2, dadurch gekennzeichnet, daß die Frequenz des Wechselstroms (17) variiert wird zur Anpassung an den geforderten Betriebszustand des Elektromotors (18), wobei vorzugsweise bei geringer Belastung des Elektromotors (18) eine hohe Frequenz eingestellt wird.

4. Verfahren nach einem der vorhergehenden Ansprüche, dadurch gekennzeichnet, daß die Amplitude der Wechselspannung (17) variabel ist.

5. Verfahren nach einem der vorhergehenden Ansprüche, dadurch gekennzeichnet, daß der Verlauf des Wechselstromes (17) variabel ist, wobei er vorzugsweise im wesentlichen sinusförmig ist.

6. Verfahren nach einem der vorhergehenden Ansprüche, dadurch gekennzeichnet, daß der Gleichstrom (13) aus einer Wechselstrom-Versorgung (2) erzeugt wird, insbesondere einer einphasigen Wechselstrom-Versorgung.

7. Verfahren nach Anspruch 6, dadurch gekennzeichnet, daß der Wechselstrom (17) durch einen ersten Umrichter (12) aus dem Gleichstrom erzeugt wird, wobei dieser als Wechselrichter (12) vorzugsweise über einen Zwischenkreis (13) mit einem zweiten Umrichter (14) als Gleichrichter für den Gleichstrom verbunden ist.

8. Vorrichtung, insbesondere zur Durchführung des Verfahrens nach einem der Ansprüche 1 bis 7, zum Betreiben eines Elektromotors (18) eines Dokumentenvernichters zum Zerkleinern von Flachmaterial, dadurch gekennzeichnet, daß sie wenigstens einen Umrichter (12) aufweist, der aus einem Gleichstrom (13) einen mindestens einphasigen Wechselstrom (17) für den Elektromotor (18) erzeugt.

9. Vorrichtung nach Anspruch 8, dadurch gekennzeichnet, daß der Elektromotor ein Drehstrom-Motor (18) ist, vorzugsweise ein Asynchron-Motor, insbesondere mit einem Kurzschlußläufer, wobei der erzeugte Wechselstrom (17) dreiphasig ist.

10. Vorrichtung nach Anspruch 8 oder 9, dadurch gekennzeichnet, daß der Umrichter (12) zur Erzeugung eines Wechselstromes (17) mit im wesentlichen beliebiger Form, insbesondere mit variabler Frequenz, ausgebildet ist.

11. Vorrichtung nach einem der Ansprüche 8 bis 10, dadurch gekennzeichnet, daß ein zweiter Umrichter (14) vorgesehen ist, der den Gleichstrom (13) aus einer Wechselstrom-Versorgung (15) erzeugt, welche vorzugsweise einphasig ist, wobei er insbesondere über einen Zwischenkreis (13) mit dem ersten Umrichter (12) verbunden ist.

12. Vorrichtung nach einem der Ansprüche 8 bis 11, dadurch gekennzeichnet, daß der Elektromotor (18) einen Drehzahlgeber (20) aufweist, insbesondere an einem Wellenende (19), der auf den ersten Umrichter (12) einwirkt.
